# EUROPÄISCHE PATENTSCHRIFT

(11) **EP 1 642 026 B1**
(45) Veröffentlichungstag und Bekanntmachung des Hinweises auf die Patenterteilung: **10.10.2007**
(21) Anmeldenummer: 04739202.2
(22) Anmeldetag: 14.05.2004
(51) Int. Cl.: F03D 7/04

(54) **VERFAHREN ZUM BETREIBEN EINER WINDENERGIEANLAGE**
METHOD FOR OPERATION OF A WIND ENERGY PLANT
PROCEDE DE FONCTIONNEMENT D'UNE EOLIENNE

(30) Priorität: 23.05.2003 DE 10323785
(43) Veröffentlichungstag der Anmeldung: 05.04.2006
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2004/005164
(87) Internationale Veröffentlichungsnummer: WO 2004/104412

(56) Entgegenhaltungen:
- US-A- 5 155 375
- US-A1- 2002 000 723
- US-A1- 2003 057 703
- US-B1- 6 525 518

## Beschreibung

Die vorliegende Erfindung betrifft ein Verfahren zur Erkennung eines Einsansatzes beim Betrieb einer Windenergieanlage, wie im Oberbegriff des Anspruches 1 offenbart. Weiterhin betrifft die Erfindung eine Windenergieanlage gemäß dem Oberbegriff des Anspruches 8.

Der Begriff "Parameter" bzw. "Betriebsparameter" wird hier im Sinne eines direkt erfassten Parameters, aber auch im Sinne eines Parameterwertes verwendet, der aus einem erfassten Wert abgeleitet wurde.

Aus der US-Patentanmeldung US 2002/0000723 A1 ist ein Steuersystem für eine Windenergieanlage mit Sensormitteln für die Erfassung von Messwerten bekannt, welche Messwerte für die Bestimmung eines Ausmaßes einer in Abhängigkeit einer Randbedingung auftretenden Belastung der Turbine der Windenergieanlage verwendet werden. Bei einer übermäßigen Belastung der Windenergieanlage kann deren Betrieb auf der Basis der erfassten Belastung beeinflusst oder eingestellt werden.

Aus der US-Patentanmeldung US 2003/0057703 A1 ist ein Kontrollgerät für Windturbinen bekannt, bei dem das Kontrollgerät die Drehmomentbelastung in Abhängigkeit von einer gemessenen Belastung in einzelnen Antriebssträngen in diesen reguliert.

Windenergieanlagen werden bereits seit einiger Zeit in solchen Stückzahlen hergestellt, dass hier ohne Weiteres von einer Serienfertigung gesprochen werden kann. Allerdings ist jede Windenergieanlage letztlich doch ein Unikat, da auch in der Serienfertigung Abweichungen von optimalen Vorgaben auftreten. Dies ist bekanntlich durchaus kein Phänomen der Serienfertigung von Windenergieanlagen. Vielmehr gibt es in vielen Bereichen des täglichen Lebens Vorgabewerte und einen zulässigen Toleranzbereich, innerhalb dessen Abweichungen von den vorgegebenen Werten akzeptiert werden und unproblematisch sind.

Da die Rotorblätter von Windenergieanlagen mit einem außerordentlich hohen Anteil an Handarbeit hergestellt werden und beträchtliche Dimensionen erreichen, ist auch jedes einzelne Rotorblatt ein Unikat. Eine Windenergieanlage mit drei Rotorblättern weist deshalb bereits am Rotor drei Unikate auf. Daher ist kein Rotor einer Windenergieanlage wie ein anderer und bereits der Austausch eines Rotorblattes verändert den gesamten Rotor - innerhalb des Toleranzbereiches.

Entsprechend unterscheidet sich auch das Betriebsverhalten jeder Windenergieanlage von demjenigen aller anderen Windenergieanlagen; auch wenn diese vom gleichen Typ sind. Nun liegen die Abweichungen im zulässigen Toleranzbereich, können aber gleichwohl zu Leistungseinbußen führen.

Windenergieanlagen und insbesondere deren im Bereich der Gondel außen angebrachte Teile wie der Rotor, aber auch das Anemometer, unterliegen dabei insbesondere im Winter der Gefahr einer Vereisung. Eine Vereisung des Anemometers kann leicht zu Fehlmessungen führen, die wiederum eine ungeeignete Steuerung der Windenergieanlage zur Folge haben.

Eine Vereisung des Rotors birgt die Gefahr, dass durch Eisabwurf Personen und Sachen in der Umgebung der Windenergieanlage zu Schaden kommen können. Da bei vereisten Rotorblättern nicht vorhersagbar ist, wann sich welche Menge Eis löst, muss die Windenergieanlage insbesondere bei einer Vereisung der Rotorblätter angehalten werden, um eine Gefährdung der Umgebung zu vermeiden.

Im Stand der Technik sind verschiedene Ansätze bekannt geworden, um diese Probleme zu vermeiden. So sind z. B. beheizbare Anemometer verfügbar. Die Heizung dieser Anemometer soll eine Vereisung von vornherein verhindern. Eine völlige Sicherheit gegen die Vereisung des Anemometers ist eine solche Heizung jedoch nicht, da einerseits die Heizung ausfallen kann und andererseits auch eine funktionsfähige Heizung nicht bis zu beliebig tiefen Temperaturen einen Eisansatz verhindern kann.

Auch für die Rotorblätter sind verschiedene Konzepte bekannt geworden. So sind Rotorblätter beheizbar, um wiederum jeden Eisansatz zu vermeiden. Gerade bei großen Windenergieanlagen mit entsprechend großen Rotorblättern ist aber der Energieaufwand dafür beträchtlich. Aus der DE 195 28 862 A1 ist ein System bekannt, bei dem nach aufgetretener Vereisung die Anlage angehalten wird und dann die Rotorblätter beheizt werden, um so mit möglichst optimiertem Energieeinsatz die Vereisung der Rotorblätter zu beseitigen. Allerdings erfolgt die Erkennung der Vereisung im Stand der Technik häufig durch die Erfassung von Unwuchten im Rotor, die sich ergeben, wenn der Rotor einen Teil des bereits ausgebildeten Eises abwirft.

Von diesem ersten Eisabwurf geht jedoch bereits eine Gefahr für die Umgebung aus und da mit zunehmender Größe der Rotorblätter auch deren Masse zunimmt, führt der Abwurf im Vergleich dazu relativ kleiner Mengen Eis nicht zu einer erfassbaren Unwucht, so dass eine zuverlässige Eisansatzerkennung schwierig ist.

Aufgabe der vorliegenden Erfindung ist es daher, den Betrieb einer Windenergieanlage an Veränderungen anpassen zu können.

Die Aufgabe wird erfindungsgemäß mit einem Verfahren mit den Merkmalen nach Anspruch 1 und einer Windenergieanlage mit den Merkmalen nach Anspruch 8 gelöst.

Dabei liegt der Erfindung die Erkenntnis zu Grunde, dass bei pragmatischer Betrachtung auch Eisansatz an einem Rotorblatt eine (vorübergehende, meteorologisch bedingte) Veränderung der Rotorblattform ist. Daraus ergibt sich, dass ein Eisansatz an den Rotorblättern einer Windenergieanlage stets zu einer Veränderung des aerodynamischen Profils und damit zu einer Beeinträchtigung der Leistung der Windenergieanlage führt. Allerdings ergeben sich eben auch durch fertigungsbedingte Abweichungen der Rotorblätter von der vorgegebenen Optimalform und durch allmähliche Verschmutzung der Rotorblätter während des Betriebs Abweichungen von dieser Form und damit Abweichungen im Betrag der erzeugten Leistung.

Werden nun vorgegebene Betriebsparameter wie Windgeschwindigkeit, Anstellwinkel der Rotorblätter und erzeugte Leistung erfasst, können diese mit in der Windenergieanlage gespeicherten Werten verglichen werden. Unter Berücksichtigung der Randbedingung der Außentemperatur, aus der abgeleitet werden kann, ob eine Vereisung überhaupt auftreten kann oder nicht, können nun entweder die in der Windenergieanlage gespeicherten Werte an die tatsächliche Situation angepasst werden oder der Betrieb der Anlage wird entsprechend beeinflusst.

Die Randbedingung der Außentemperatur kann mit einem Temperatursensor überwacht werden. Ergibt sich eine Außentemperatur von 2°C oder mehr, ist eine Vereisung sicher ausgeschlossen und eine Abweichung der Werte ist demnach sicher nicht auf Vereisung, sondern auf Abweichungen durch Toleranzen, z. B. im Rotorblattprofil, zurückzuführen. Wird eine Temperatur von 2°C unterschritten, kann eine Vereisung nicht mehr zuverlässig ausgeschlossen werden. Folglich kann bei einer Veränderung der Parameterwerte eine Vereisung nicht ausgeschlossen werden und deshalb wird der Betrieb der Anlage beeinflusst, z. B., indem die Anlage angehalten wird.

Um die in der Anlage gespeicherten Parameterwerte an kontinuierliche Veränderungen an der Anlage anpassen zu können und nicht zu einer fehlerhaften Eisansatzerkennung zu gelangen, können die in der Anlage gespeicherten Parameterwerte bei (wiederholtem) Auftreten von Abweichungen entsprechend angepasst werden. Um diese Parameterwerte anzupassen, wird eine Differenz zwischen dem gespeicherten Parameterwert und dem erfassten Parameterwert ermittelt und entsprechend dieser Differenz können die Werte der gespeicherten Parameter mit einer vorgegebenen Gewichtung verändert werden. Diese Gewichtung kann z. B. ein Bruchteil des Betrages der Differenz sein, damit nicht eine einmalige Änderung zu einer signifikanten Veränderung der gespeicherten Parameterwerte führt.

Die Werte der Parameter und/oder der Randbedingung können während eines vorgebbaren Zeitabschnittes, z. B. 60s und/oder während einer vorgegebenen Anzahl von Messzyklen erfasst werden, um den Einfluss zufälliger Einzelereignisse zu verringern.

Da die Steuerung der Windenergieanlage abhängig von der Windgeschwindigkeit mit unterschiedlichen Parametern erfolgt, variieren die verwendeten Parameter bevorzugt abhängig von einer zweiten Randbedingung. Unterhalb der Windgeschwindigkeit, bei welcher die Anlage Nennleistung erzeugt, erfolgt die Steuerung durch die erzeugte Leistung und ist u. a. abhängig von der Windgeschwindigkeit. Entsprechend kann also von der erzeugten Leistung auf die Windgeschwindigkeit rückgeschlossen werden. Bei Erreichen und Überschreiten der Nenn-Windgeschwindigkeit erzeugt die Anlage stets die Nennleistung. Die Steuerung erfolgt in diesem Bereich, indem der Anstellwinkel der Rotorblätter verändert wird. Entsprechend lässt sich dem Anstellwinkel der Rotorblätter eine Windgeschwindigkeit zuordnen. Demnach kann also abhängig vom Erreichen der Nennleistung als Randbedingung der Parameter zwischen erzeugter Leistung und Rotorblatt-Anstellwinkel wechseln.

Nachfolgend wird ein Ausführungsbeispiel der Erfindung anhand der Figuren näher erläutert. Dabei zeigen:
- Figur 1: ein Flussdiagramm des erfindungsgemäßen Verfahrens;
- Figur 2: ein Flussdiagramm einer alternativen Ausführungsform des Verfahrens;
- Figur 3: ein Beispiel einer vorgegebenen Standard-Kennlinie und durch Messungen ermittelter Kennlinien; und
- Figur 4: eine Darstellung zur Veranschaulichung der Veränderung der gespeicherten Parameterwerte.

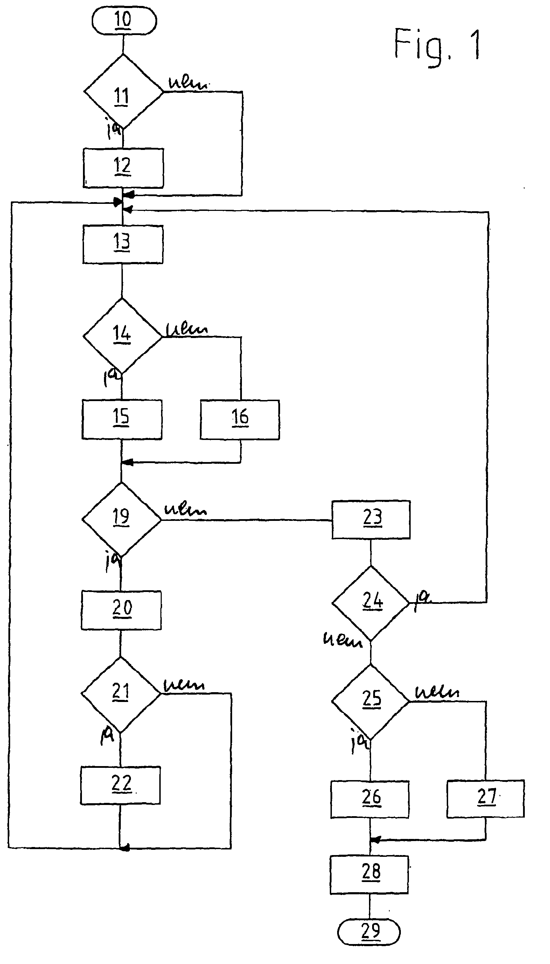

In dem in Figur 1 gezeigten Flussdiagramm sind die einzelnen Schritte mit Bezugszeichen bezeichnet. Der Schritt 10 ist der Anfang des Flussdiagramms. In Schritt 11 wird geprüft, ob es sich um die Erstinbetriebnahme dieser Windenergieanlage handelt oder nicht. Der nach unten verlaufende Zweig symbolisiert die Antwort "ja", der nach rechts verlaufende Zweig symbolisiert die Antwort "nein". Handelt es sich um eine Erstinbetriebnahme, dann werden in Schritt 12 anlagentypische Standard-Werte in einen Speicher eingetragen. Handelt es sich nicht um eine Erstinbetriebnahme, wird dieser Schritt 12 übersprungen.

In Schritt 13 werden die erzeugte Leistung Pᵢₛₜ, der Rotorblatt-Anstellwinkel α und die Windgeschwindigkeit v_{W} erfasst. In Schritt 14 wird geprüft, ob die erzeugte Leistung Pᵢₛₜ die Nennleistung P_{N} ist. Wenn dies der Fall ist, geht der Ablauf weiter über den unteren Abzweig zu Schritt 15. Dort wird als Parameter der Rotorblatt-Anstellwinkel α ausgewählt. Ist die erzeugte Leistung nicht die Nennleistung, ist sie also folglich kleiner als die Nennleistung, wird der rechte Abzweig verwendet und der Ablauf wird mit Schritt 16 fortgesetzt, wo als Parameter die erzeugte Leistung Pᵢₛₜ ausgewählt wird. In dem anschließenden Schritt 19 wird geprüft, ob die Außentemperatur υ wenigstens 2°C oder mehr beträgt. Wenn dies der Fall ist, wird der Ablauf über den unteren Abzweig zu Schritt 20 fortgesetzt.

Die Erfassung der Außentemperatur υ kann mittels eines Thermometers erfolgen. Natürlich kann auch ein weiteres Thermometer, ggf. an einem anderen Anbauort, vorhanden sein, wobei die von diesen Thermometern erfassten Temperaturen untereinander auf Plausibilität geprüft werden können.

In Schritt 20 wird abhängig von dem in den Schritten, 14, 15 und 16 ermittelten Parameter Blattanstellwinkel α oder erzeugte Leistung Pᵢₛₜ die zugehörige Windgeschwindigkeit v_{K} aus den in der Windenergieanlage gespeicherten Daten ermittelt. Dann wird diese Windgeschwindigkeit v_{K} mit der erfassten Windgeschwindigkeit v_{W} verglichen. In Schritt 21 wird geprüft, ob die erfasste Windgeschwindigkeit von der gespeicherten Windgeschwindigkeit abweicht. Wenn dies der Fall ist, wird der Ablauf über den unteren Abzweig fortgesetzt und in Schritt 22 wird ein neuer Wert für den gespeicherten Parameterwert bestimmt und in der Windenergieanlage gespeichert.

Dieser neue Wert wird mit einem Faktor von 0,05 als Gewichtungsfaktor multipliziert und unter Beachtung des Vorzeichens zu dem bisherigen Wert addiert. Ergibt sich also ein geringerer Wert, so wird 1/20 der Differenz von dem bisher gespeicherten Wert subtrahiert; ergibt sich ein höherer Wert, wird 1/20 der Differenz zu diesem Wert addiert. Nachdem dieser neu bestimmte Wert gespeichert ist, beginnt eine erneute Erfassung der erzeugten Leistung Pᵢₛₜ, des Rotorblatt-Anstellwinkels α und der Windgeschwindigkeit v_{W} und der Ablauf wird beginnend in Schritt 13 erneut durchlaufen.

Natürlich kann der Gewichtungsfaktor auch jeden anderen geeigneten Wert annehmen. Dabei ist leicht erkennbar, dass bei einem größeren Gewichtungsfaktor die Anpassung der gespeicherten Werte an die erfassten Werte schneller erfolgt als bei einem kleineren Gewichtungsfaktor.

Der Gewichtungsfaktor kann z. B. auch abhängig vom Betrag der Differenz zwischen erfasstem Wert und gespeichertem Wert verändert werden. Je größer die Differenz ist, um so kleiner kann der Gewichtungsfaktor sein, um z. B. den Einfluss durch eine große Differenz zu verringern oder umgekehrt.

Alternativ kann auf einen Gewichtungsfaktor verzichtet werden. Statt dessen kann die Anpassung der gespeicherten Werte an die erfassten Werte unabhängig oder stufenweise abhängig von den Differenzen mit vorgegebenen Beträgen erfolgen. Die Anpassung kann also stets mit einem Wert w erfolgen oder für einen vorbestimmten ersten Bereich des Differenzbetrages wird ein erster vorbestimmter Wert w₁ verwendet, für einen vorbestimmten zweiten Bereich des Differenzbetrages ein vorbestimmter zweiter Wert w₂, für einen dritten Bereich ein Wert w₃, usw.

Weicht der im Schritt 20 ermittelte Wert nicht bzw. nicht signifikant von dem gespeicherten Wert ab, kann der Ablauf von Schritt 21 über den rechten Abzweig fortgesetzt und Schritt 22 umgangen werden. Entsprechend kann dieser Schritt 22 eingespart und somit der verwendete Prozessor entlastet werden.

Wird in Schritt 19 festgestellt, dass die Temperatur nicht wenigstens 2°C beträgt, kann eine Vereisung der Rotorblätter nicht mehr zuverlässig ausgeschlossen werden. Entsprechend verzweigt der Ablauf über den seitlichen Abzweig zu Schritt 23. In Schritt 23 wird wiederum entsprechend dem erfassten Parameter die dem gespeicherten Parameterwert zugeordnete Windgeschwindigkeit v_{W} ermittelt.

In Schritt 24 wird geprüft, ob (unter Berücksichtigung eines Toleranzbereiches) die aus den gespeicherten Parameterwerten ermittelte Windgeschwindigkeit v_{K} mit der erfassten Windgeschwindigkeit v_{W} übereinstimmt. Wenn dies der Fall ist, kehrt der Ablauf über den seitlichen Abzweig zu Schritt 13 zurück und der Ablauf wird wiederum mit der Erfassung der erzeugten Leistung Pᵢₛₜ, des Rotorblatt-Anstellwinkels α und der Windgeschwindigkeit v_{W} fortgesetzt.

Wenn in Schritt 24 erkannt wird, dass die erfasste Windgeschwindigkeit v_{W} nicht mit der aus den gespeicherten Werten ermittelten Windgeschwindigkeit v_{K} übereinstimmt, wird in Schritt 25 geprüft, ob die erfasste Windgeschwindigkeit v_{W} kleiner als die aus den Parameterwerten ermittelte Windgeschwindigkeit v_{K} ist.

Wenn dies der Fall ist, wird der Ablauf über den unteren Abzweig fortgesetzt und in Schritt 26 wird eine Anemometer-Vereisung angenommen, da sich aus der von der Anlage erzeugten Leistung bzw. aus dem Blattanstellwinkel ergibt, dass die Windgeschwindigkeit höher sein muss, als die vom Anemometer erfasste.

Ist die erfasste Windgeschwindigkeit v_{W} nicht kleiner als die aus den gespeicherten Parameterwerten ermittelte Windgeschwindigkeit v_{K}, wird der Ablauf über den seitlichen Abzweig und in Schritt 25 fortgesetzt.

Da aus Schritt 24 bekannt ist, dass die erfasste Windgeschwindigkeit v_{W} nicht gleich der aus den gespeicherten Parameterwerten v_{K} ermittelten Windgeschwindigkeit ist, und da die erfasste Windgeschwindigkeit v_{W} auch nicht kleiner als die aus den gespeicherten Parameterwerten ermittelte Windgeschwindigkeit v_{K} ist, muss sie also größer sein. Wenn aber bei dieser größeren Windgeschwindigkeit eine geringere Leistung erzeugt wird oder ein geringerer Rotorblatt-Anstellwinkel erfasst wird, folgt daraus zwangsläufig, dass das aerodynamische Verhalten der Rotorblätter verändert ist. Da aus Schritt 19 bekannt ist, dass die Temperatur unterhalb von 2°C liegt, kann eine Vereisung der Rotorblätter nicht ausgeschlossen werden. Entsprechend wird in Schritt 27 nun eine Vereisung der Rotorblätter angenommen.

Sowohl eine in Schritt 26 angenommenen Vereisung des Anemometers wie auch die in Schritt 27 angenommene Vereisung der Rotorblätter führt in Schritt 28 zu einem Anhalten der Anlage. Damit ist eine Gefährdung der Umgebung in jedem Fall sicher ausgeschlossen.

Der gesamte Ablauf endet dann in Schritt 29.

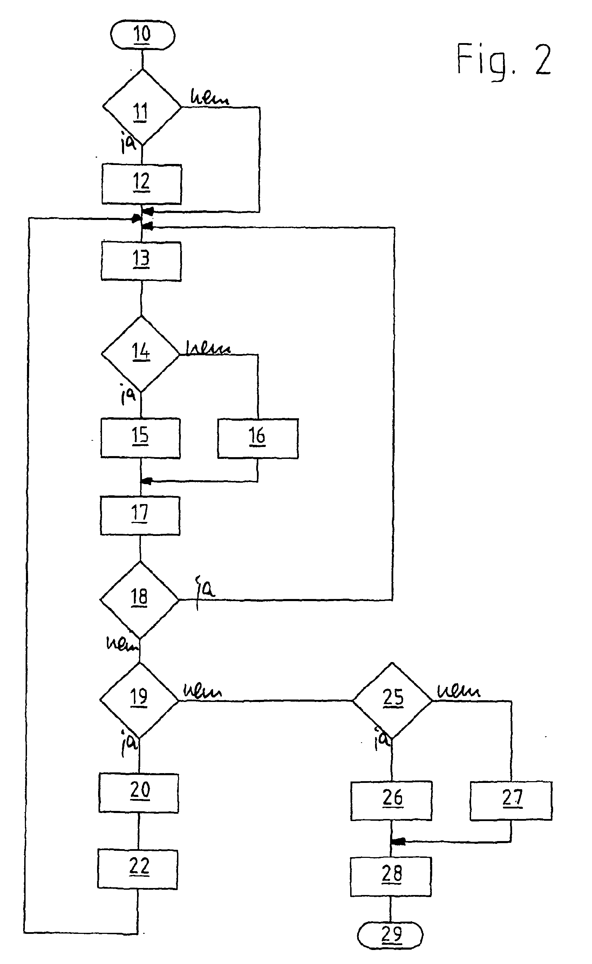

In dem in Figur 2 gezeigten Flussdiagramm sind die einzelnen Schritte mit Bezugszeichen bezeichnet. Der Schritt 10 Ist der Anfang des Flussdiagramms. In Schritt 11 wird geprüft, ob es sich um die Erstinbetriebnahme dieser Windenergieanlage handelt oder nicht. Der nach unten verlaufende Zweig symbolisiert die Antwort "ja", der nach rechts verlaufende Zweig symbolisiert die Antwort "nein". Handelt es sich um eine Erstinbetriebnahme, dann werden in Schritt 12 anlagentypische Standard-Werte in einen Speicher eingetragen. Handelt es sich nicht um eine Erstinbetriebnahme, wird dieser Schritt 12 übersprungen.

In Schritt 13 werden die erzeugte Leistung Pᵢₛₜ, der Rotorblatt-Anstellwinkel *α* und die Windgeschwindigkeit v_{W} erfasst. In Schritt 14 wird geprüft, ob die erzeugte Leistung Pᵢₛₜ die Nennleistung P_{N} ist. Wenn dies der Fall ist, geht der Ablauf weiter über den unteren Abzweig zu Schritt 15. Dort wird als Parameter der Rotorblatt-Anstellwinkel α ausgewählt. Ist die erzeugte Leistung nicht die Nennleistung, ist sie also folglich kleiner als die Nennleistung, wird der rechte Abzweig verwendet und der Ablauf wird mit Schritt 16 fortgesetzt, wo als Parameter die erzeugte Leistung Pᵢₛₜ ausgewählt wird.

In Schritt 17 wird entsprechend dem in Schritt 15 oder Schritt 16 ausgewählten Parameter die zugeordnete gespeicherte Windgeschwindigkeit v_{K} ermittelt. Dieser Windgeschwindigkeit v_{K} wird ein Toleranzbereich mit vorgegebener Breite zugeordnet. Diese Breite kann z. B. abhängig von Standort der Windenergieanlage variieren.

An Standorten mit einer höheren Gefährdung der Umgebung, z. B. in der Nähe von Gebäuden, kann durch einen engen Toleranzbereich eine schnelle Reaktion der Steuerung der Windenergieanlage auf Abweichungen von den gespeicherten Werten verwirklicht werden. Für diesen engen Toleranzbereich sind empirisch Werte von ±0,5 m/s bis ±2 m/s, bevorzugt ±1,2 m/s ermittelt worden. Für weniger gefährdete Bereiche hat sich ein Bereich von ±1 m/s bis ±3m/s, bevorzugt ±2 m/s als sinnvoll ergeben.

In Schritt 18 wird geprüft, ob die erfasste Windgeschwindigkeit v_{W} unter Berücksichtigung des Toleranzbereiches mit der aus den gespeicherten Werten ermittelten Windgeschwindigkeit v_{K} übereinstimmt. Wenn dies der Fall ist, wird der Ablauf über den rechten Abzweig von Schritt 18 fortgesetzt und kehrt zu Schritt 13 zurück. Dort werden erneut die Windgeschwindigkeit v_{W}, der Rotorblatt-Anstellwinkel α und die erzeugte Leistung Pᵢₛₜ erfasst.

Stimmt die erfasste Windgeschwindigkeit v_{W} nicht mit der gespeicherten Windgeschwindigkeit v_{K} überein (natürlich wiederum unter Berücksichtigung des Toleranzbereiches), wird der Ablauf in Schritt 18 durch den unteren Abzweig zu Schritt 19 fortgesetzt.

In dem Schritt 19 wird geprüft, ob die Außentemperatur υ wenigstens 2 °C oder mehr beträgt. Wenn dies der Fall ist, wird der Ablauf über den unteren Abzweig zu Schritt 20 fortgesetzt.

In Schritt 20 wird abhängig von dem in den Schritten 14, 15 und 16 ermittelten Parameter Blattanstellwinkel α oder erzeugte Leistung Pᵢₛₜ die zugehörige Windgeschwindigkeit v_{K} aus den in der Windenergieanlage gespeicherten Daten sowie deren Differenz ermittelt. In Schritt 22 wird ein neuer Wert für den gespeicherten Parameterwert bestimmt und in der Windenergieanlage gespeichert.

Dieser neue Wert wird mit einem Faktor von 0,05 als Gewichtungsfaktor multipliziert und unter Beachtung des Vorzeichens zu dem bisherigen Wert addiert. Ergibt sich also ein geringerer Wert, so wird 1/20 der Differenz von dem bisher gespeicherten Wert subtrahiert; ergibt sich ein höherer Wert, wird 1/20 der Differenz zu diesem Wert addiert. Nachdem dieser neu bestimmte Wert gespeichert ist, beginnt eine erneute Erfassung der erzeugten Leistung Pᵢₛₜ, des Rotorblatt-Anstellwinkels α und der Windgeschwindigkeit v_{W} und der Ablauf wird beginnend in Schritt 13 erneut durchlaufen.

Für den Gewichtungsfaktor gelten natürlich auch hier die in der Beschreibung zu Fig. 1 gemachten Anmerkungen.

Wird in Schritt 19 festgestellt, dass die Temperatur nicht wenigstens 2°C beträgt, kann eine Vereisung der Rotorblätter nicht mehr zuverlässig ausgeschlossen werden. Entsprechend verzweigt der Ablauf über den seitlichen Abzweig zu Schritt 25.

In Schritt 25 wird geprüft, ob die erfasste Windgeschwindigkeit v_{W} kleiner als die aus den Parameterwerten ermittelte Windgeschwindigkeit v_{K} ist.

Wenn dies der Fall ist, wird der Ablauf über den unteren Abzweig fortgesetzt und in Schritt 26 wird eine Anemometer-Vereisung angenommen, da sich aus der von der Anlage erzeugten Leistung Pᵢₛₜ, bzw. aus dem Blattanstellwinkel α ergibt, dass die Windgeschwindigkeit höher sein muss, als die vom Anemometer erfasste.

Ist die erfasste Windgeschwindigkeit v_{W} nicht kleiner als die aus den gespeicherten Parameterwerten ermittelte Windgeschwindigkeit v_{K}, wird der Ablauf über den seitlichen Abzweig und in Schritt 25 fortgesetzt.

Da aus Schritt 24 bekannt ist, dass die erfasste Windgeschwindigkeit v_{W} nicht gleich der aus den gespeicherten Parameterwerten ermittelten Windgeschwindigkeit v_{K} ist, und da die erfasste Windgeschwindigkeit v_{W} auch nicht kleiner als die aus den gespeicherten Parameterwerten ermittelte Windgeschwindigkeit v_{K} ist, muss diese also größer sein. Wenn aber bei dieser größeren Windgeschwindigkeit eine geringere Leistung erzeugt wird oder ein geringerer Rotorblatt-Anstellwinkel erfasst wird, folgt daraus zwangsläufig, dass das aerodynamische Verhalten der Rotorblätter verändert ist. Da aus Schritt 19 bekannt ist, dass die Temperatur unterhalb von 2°C liegt, kann eine Vereisung der Rotorblätter nicht ausgeschlossen werden. Entsprechend wird in Schritt 27 eine Vereisung der Rotorblätter angenommen.

Sowohl eine in Schritt 26 angenommenen Vereisung des Anemometers wie auch die in Schritt 27 angenommene Vereisung der Rotorblätter führt in Schritt 28 zu einem Anhalten der Anlage. Damit ist eine Gefährdung der Umgebung in jedem Fall sicher ausgeschlossen.

Der gesamte Ablauf endet dann in Schritt 29.

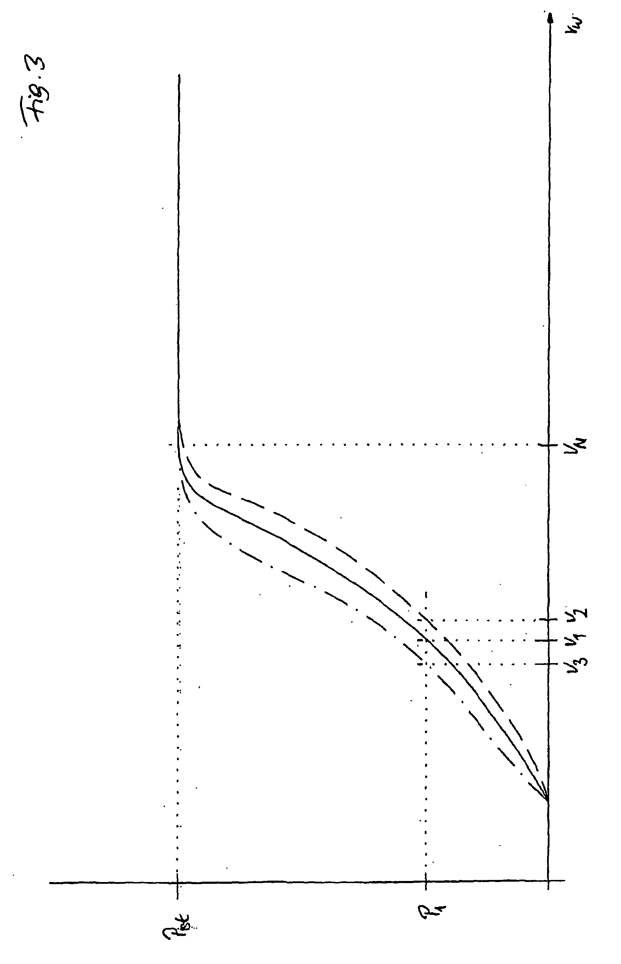

Figur 3 zeigt eine Darstellung mit drei Kennlinien. An der Abszisse des Koordinatensystems ist die Windgeschwindigkeit v_{W} angegeben. Dabei ist die Windgeschwindigkeit v_{W} die bis zur Nenn-Windgeschwindigkeit v_{N} relevante Größe, bei welcher die Windenergieanlage ihre Nennleistung erreicht, Oberhalb dieser Windgeschwindigkeit v_{N} ist der Rotorblatt Anstellwinkel α der relevante Parameter. Dieser ist in der Figur jedoch aus Gründen der Übersichtlichkeit nicht dargestellt.

Auf der Ordinate ist die Leistung P abgetragen. Die Nennleistung P_{N} ist angegeben.

Die durchgezogene Linie sei das Beispiel für die in der Windenergieanlage bei der Erstinbetriebnahme gespeicherten Standard-Parameterwerte. Die gestrichelte Linie bezeichnet eine erste durch Anpassung der gespeicherten Standardwerte an die erfassten Werte gebildete anlagenspezifische Kennlinie und die strichpunktierte Linie stellt ein zweites Beispiel einer ebenfalls durch Anpassung der gespeicherten Standardwerte an die erfassten Werte gebildeten anlagenspezifischen Kennlinie dar. Natürlich kann für eine Windenergieanlage stets nur eine anlagenspezifische Kennlinie gelten.

Die unterhalb der durchgezogenen Kennlinie verlaufende erste, gestrichelte Kennlinie deutet bereits darauf hin, dass die von der Anlage tatsächlich erzeugte Leistung unterhalb der in den Standard-Parametern abgebildeten Leistung liegt. Die zweite, strichpunktierte Kennlinie stellt hingegen höhere Leistungen im Bereich bis zur Nennwindgeschwindigkeit v_{N} dar.

Unterhalb der Nenn-Windgeschwindigkeit V_{N} wird der Parameter Pᵢₛₜ verwendet. Aus der gestrichelten Kinnlinie geht hervor, dass die Leistung P₁ bei einer erfassten Windgeschwindigkeit v₂ erzeugt wird. Aus der (durchgezogenen) Standard-Kennlinie ergibt sich für die Leistung P₁ eine Windgeschwindigkeit v₁, die unterhalb der erfassten Windgeschwindigkeit v₂ liegt. Die bei der Leistung P₁ erfasste Windgeschwindigkeit v₂ ist also größer als die aus den gespeicherten Werten ermittelte Windgeschwindigkeit v₁. Bei einer Temperatur von weniger als 2°C würde erfindungsgemäß die Windenergieanlage unter der Annahme einer Rotorblatt-Vereisung abgeschaltet.

Bei einer Temperatur von wenigstens 2°C oder mehr würde die Differenz Δv = v₂- v₁ gebildet. Als Korrekturwert wird Δv/20 zu dem gespeicherten Wert addiert und im Speicher anstelle des bisherigen Wertes abgelegt. Da die Differenz Δv ein positives Vorzeichen hat, wird der gespeicherte Wert in Richtung größerer Werte, also in Richtung v₂ mit 1/20 des Betrages der Differenz verschoben.

Die strichpunktierte Linie zeigt eine Abweichung in der entgegengesetzten Richtung. Bei der Leistung P₁ wird eine Windgeschwindigkeit v₃ erfasst, die geringer als die aus der Standard-Kennlinie ermittelte Windgeschwindigkeit v₁ ist. Die Differenz v₃ - v₁ ergibt wiederum Δv und Δv/20 wird als Korrekturwert zu dem gespeicherten Wert addiert. Da in diesem Fall aber die Differenz Δv negativ ist, wird entsprechend ein Wert mit negativem Vorzeichen zu dem gespeicherten Wert addiert, folglich wird Δv/20 subtrahiert. Somit wird auch hier der gespeicherte Wert mit 1/20 der Differenz unter Beachtung des Vorzeichens, also in Richtung auf v₃, angepasst.

Wird die Nennleistung erreicht, also die Nenn-Windgeschwindigkeit v_{N} erreicht oder überschritten, dann wird als Parameter nicht mehr die erzeugte Leistung P_{ist,} sondern der Anstellwinkel α der Rotorblätter als Parameter erfasst. Der weitere Ablauf entspricht dem oben erläuterten. Aus dem erfassten Rotorblatt-Anstellwinkel α wird mittels der Standard-Kennlinie (durchgezogene Kennlinie) die zugeordnete Windgeschwindigkeit ermittelt. Diese wird mit der erfassten Windgeschwindigkeit verglichen. Ergeben sich hier Differenzen, werden diese wie oben beschrieben verarbeitet,

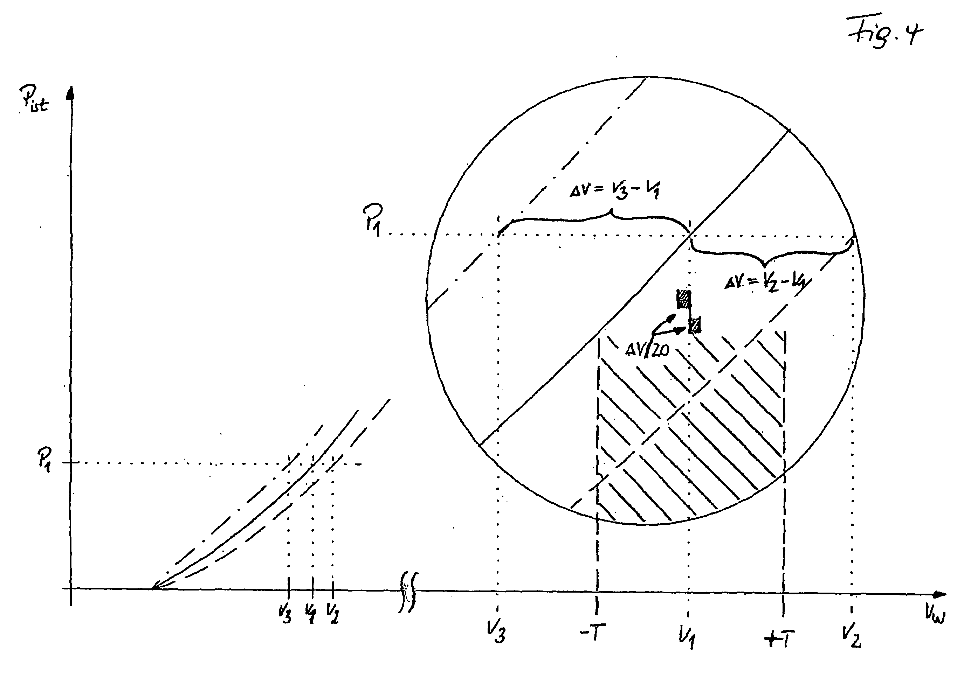

Figur 4 ist eine vergrößerte Darstellung eines Abschnittes der in Fig. 3 gezeigten Kennlinien in einem Bereich unterhalb der Nenn-Windgeschwindigkeit v_{N}. In dieser Figur 4 sind die Windgeschwindigkeiten wie in Figur 3 eingetragen.

Durch die vergrößerte Darstellung wird die Differenz besser erkennbar. Bezugs-Windgeschwindigkeit ist die aus den gespeicherten Werten ermittelte Windgeschwindigkeit v₁ Diese wird jeweils von der erfassten Windgeschwindigkeit v₂, v₃ subtrahiert. Entsprechend ergibt sich eine Δv. Für die Differenz v₂ - v₁ hat Δv ein positives Vorzeichen. Für die Differenz v₃ - v₁ hat Δv aber ein negatives Vorzeichen.

Um einen zu großen Einfluss dieser Abweichungen auf die gespeicherten Werte zu vermeiden, wird die Differenz mit einem vorgegebenen Faktor gewichtet. Im vorliegenden Fall sei dieser Faktor 0,05.

Um die gespeicherten Werte an die einzelne Windenergieanlage anzupassen, wird die gewichtete Differenz, also hier Δv/20 zu dem gespeicherten Wert v₁ addiert bzw. wird bei Auftreten einer Differenz bei einer Außentemperatur von weniger als 2°C eine Vereisung angenommen und der Betrieb der Windenergieanlage gestoppt.

Um nicht bei jeder beliebig kleinen Abweichung Δv reagieren zu müssen, kann ein Toleranzbereich vorgesehen sein. Dieser ist in der Figur mit -T für die Untergrenze und +T für die Obergrenze bezeichnet, Bei Abweichungen Δv im Toleranzbereich wird die Anlage weiter betrieben bzw. werden die in der Windenergieanlage gespeicherten Werte nicht verändert. Selbstverständlich kann der Toleranzbereich z. B. nur für die Betriebssteuerung der Windenergieanlage gelten. Dann werden auch bei geringen Änderungen zwar die gespeicherten Werte angepasst, aber auch bei Temperaturen unter 2°C wird die Anlage noch weiter betrieben.

Die Werte für den Toleranzbereich können je nach Standort der einzelnen Windenergieanlage einzeln eingestellt werden. Wo für einen Standort eine Toleranz von ±2 m/s ausreicht, ist für einen anderen Standort des gleichen Anlagentyps ein Toleranzbereich von ±1,2 m/s erforderlich.

Bei einer Windgeschwindigkeit v₁ von 10 m/s ergibt sich bei ±1,2 m/s als Toleranz eine Obergrenze von 11,2 m/s und eine Untergrenze von 8,8 m/s. Innerhalb dieses Bereiches von 8,8 m/s bis 11,2 m/s können also beispielsweise die Parameter angepasst werden, die Anlage wird aber auch bei niedrigen Außentemperaturen weiterbetrieben.

In der Figur sei v₁ 10 m/s , v₂ betrage 12 m/s und v₃ liege bei 8,5 m/s. Damit ergeben sich Δv = v₂ - v₁ = 2 m/s. Die Anpassung des gespeicherten Wertes erfolgt mit 1/20, also in diesem Beispiel 0,1 m/s. Da das Vorzeichen positiv ist, wird v₁ demnach auf 10,1 m/s verändert,

Für eine Differenz Δv = v₃ - v₁ ergibt sich ein Wert von 8,5 m/s - 10 m/s = -1,5 m/s. Die Anpassung von v₁ erfolgt wiederum mit Δv/20, also - 0,075 m/s. Daher wird v₁ auf 9,925 m/s verändert.

Der Gewichtungsfaktor bestimmt, wie schnell die gespeicherten Werte an die erfassten Werte angepasst werden. Je größer dieser Faktor ist, um so schneller erfolgt die Anpassung.

Allerdings hat auch die Erfassung der Werte einen Einfluss. Üblicherweise werden im Bereich der Windenergieanlagen insbesondere Umgebungswerte wie Temperatur oder Windgeschwindigkeit nicht aus einer Einzelmessung ermittelt, sondern aus einer Mehrzahl von Messzyklen von z. B. 30 oder über einen vorgegebenen Zeitraum von z. B. 60 s erfasst. Aus diesen Ergebnissen werden dann die Werte z. B. als arithmetisches oder geometrisches Mittel abgeleitet.

## Patentansprüche

1. Verfahren zur Erkennung eines Eisansatzes an Rotorblättern einer Windenergieanlage beim Betrieb der Windenergieanlage mit den Schritten:
- Erfassen der Werte vorgegebener Betriebsparameter der Windenergieanlage mittels geeigneter Sensoren (Schritt 13),
- Erfassen eines Wertes wenigstens einer ersten vorgegebenen Randbedingung, nämlich der Außentemperatur im Bereich der Windenergieanlage (Schritt 19),
- Vergleichen der erfassten Werte mit gespeicherten Werten der Betriebsparameter,
**dadurch gekennzeichnet, dass** bei Abweichungen der erfassten Betriebsparameterwerte von den gespeicherten Betriebsparameterwerten und dann abhängig vom erfassten Wert der Randbedingungen, nämlich der Außentemperatur im Bereich der Windenergieanlage (Schritt 19), entweder die gespeicherten Betriebsparameterwerte an die erfassten Betriebsparameterwerte angepasst werden (Schritte 20, 21, 22) oder der Betrieb der Windenergieanlage abhängig auch von den vorgegebenen, erfassten Betriebsparameterwerten (Schritte 24, 25) beeinflusst wird (Schritte 26-29).

2. Verfahren nach Anspruch 1,
**dadurch gekennzeichnet, dass** bei Überschreiten eines Grenzwertes der Randbedingung die gespeicherten Betriebsparameterwerte angepasst werden und dass bei Unterschreiten des Grenzwertes der Betrieb der Windenergieanlage beeinflusst wird.

3. Verfahren nach einem der vorstehenden Ansprüche,
**dadurch gekennzeichnet. dass** die Anpassung der gespeicherten Betriebsparameterwerte mit einer vorgegebenen Gewichtung des Betrags der Abweichung von dem gespeicherten Betriebsparameterwert erfolgt.

4. Verfahren nach einem der vorstehenden Ansprüche,
**dadurch gekennzeichnet, dass** die erfassten Betriebsparameterwerte und/oder Randbedingungen während eines vorgebbaren Zeitabschnittes erfasst werden.

5. Verfahren nach einem der vorstehenden Ansprüche,
**dadurch gekennzeichnet, dass** die Betriebsparameterwerte und/oder Randbedingungen während einer vorgegebenen Anzahl von Messzyklen erfasst werden.

6. Verfahren nach einem der vorstehenden Ansprüche,
**dadurch gekennzeichnet, dass** die verwendeten Betriebsparameter abhängig von einer zweiten Randbedingung variieren.

7. Verfahren nach Anspruch 5,
**dadurch gekennzeichnet, dass** bei Überschreiten eines Grenzwertes der zweiten Randbedingung Werte erster Betriebsparameter verwendet werden, und dass bei Unterschreiten des Grenzwertes der zweiten Randbedingung Werte zweiter Betriebsparameter verwendet werden.

8. Windenergieanlage, mit einer Vorrichtung zur Erkennung eines Eisansatzes an Rotorblättern der Windenergieanlage mit Sensoren zum Erfassen der Werte vorgegebener Betriebsparameter und wenigstens eines Wertes einer Randbedingung, nämlich der Außentemperatur im Bereich der Windenergieanlage, und. zum Vergleichen der Betriebsparameterwerte mit gespeicherten Werten der Betriebsparameter,
**dadurch gekennzeichnet, dass** die Vorrichtung Mittel aufweist, die bei Abweichung der erfassten Betriebsparameterwerte von den gespeicherten Betriebsparameterwerten und abhängig vom erfassten Wert der Randbedingung, nämlich der Außentemperatur im Bereich der Windenergieanlage (Schritt 19), entweder die gespeicherten Betriebsparameterwerte anpasst oder den Betrieb der Windenergieanlage abhängig auch von den vorgegebenen, erfassten Betriebsparameterwerten beeinflusst.

9. Windenergieanlage nach Anspruch 8,
**dadurch gekennzeichnet, dass** die Vorrichtung einen Mikroprozessor umfasst.

## Claims

1. Method for detecting ice accretion on rotor blades of a wind power installation during operation of the wind power installation, comprising the steps:
- detection of the values of predetermined operating parameters of the wind power installation by means of suitable sensors (Step 13),
- detection of a value of at least a first predetermined boundary condition, namely the outside temperature in the area of the wind power installation (Step 19),
- comparison of the detected values with stored values of the operating parameters,
**characterised in that**, when the detected operating parameter values deviate from the stored operating parameter values and then as a function of the detected value of the boundary conditions, namely the outside temperature in the area of the wind power installation (Step 19), either the stored operating parameter values are adapted to the detected operating parameter values (Steps 20, 21, 22) or the operation of the wind turbine is influenced (Steps 26-29) as a function also of the predetermined detected operating parameter values (Steps 24, 25).

2. Method according to claim 1,
**characterised in that**, when a limit value of the boundary condition is exceeded, the stored operating parameter values are adapted and, when the value falls below the limit value, the operation of the wind power installation is influenced.

3. Method according to either of the preceding claims,
**characterised in that** the adaptation of the stored operating parameter values is effected with a predetermined weighting of the amount of the deviation from the stored operating parameter value.

4. Method according to any one of the preceding claims,
**characterised in that** the detected operating parameter values and/or boundary conditions are detected during a predeterminable time period.

5. Method according to any one of the preceding claims,
**characterised in that** the operating parameter values and/or boundary conditions are detected during a predetermined number of measurement cycles.

6. Method according to any one of the preceding claims,
**characterised in that** the operating parameters used vary as a function of a second boundary condition.

7. Method according to claim 5,
**characterised in that**, when a limit value of the second boundary condition is exceeded, values of first operating parameters are used and, when the value falls below the limit value of the second boundary condition, values of second parameters are used.

8. Wind power installation having a device for detecting ice accretion on rotor blades of the wind power installation with sensors for detecting the values of predetermined operating parameters and at least one value of a boundary condition, namely the outside temperature in the area of the wind power installation, and for comparing the operating parameter values with stored values of the operating parameters,
**characterised in that** the device has means which, when the detected operating parameter values deviate from the stored operating parameter values and as a function of the detected value of the boundary condition, namely the outside temperature in the area of the wind power installation (Step 19), either adapt the stored operating parameter values or influence the operation of the wind power installation as a function also of the predetermined detected operating parameter values.

9. Wind power installation according to claim 8,
**characterised in that** the device includes a microprocessor.

## Revendications

1. Procédé de détection d'un dépôt de givre sur des pales de rotor d'une installation à énergie éolienne lors de l'exploitation de l'installation à énergie éolienne comprenant les étapes consistant à :
- enregistrer des valeurs de paramètres d'exploitation prédéfinis de l'installation à énergie éolienne à l'aide de capteurs adaptés (étape 13),
- enregistrer d'une valeur d'au moins une première condition aux limites prédéfinie, à savoir la température extérieure dans la zone de l'installation à énergie éolienne (étape 19),
- comparer les valeurs enregistrées avec des valeurs des paramètres d'exploitation mémorisées,
**caractérisé en ce que**, en cas d'écart des valeurs de paramètres d'exploitation enregistrées par rapport aux valeurs de paramètres d'exploitation mémorisées et ensuite en fonction de la valeur enregistrée des conditions aux limites, à savoir la température extérieure dans la zone de l'installation à énergie éolienne (étape 19), soit les valeurs de paramètres d'exploitation mémorisées sont adaptées aux valeurs de paramètres d'exploitation enregistrées (étapes 20, 21, 22), soit le fonctionnement de l'installation à énergie éolienne est contrôlé (étapes 26 à 29) en fonction aussi des valeurs enregistrées prédéfinies de paramètres d'exploitation (étapes 24, 25).

2. Procédé selon la revendication 1,
**caractérisé en ce que**, en cas de dépassement d'une valeur limite de la condition aux limites, les valeurs de paramètres d'exploitation mémorisées sont adaptées et **en ce que**, en cas de diminution de la valeur limite, le fonctionnement de l'installation à énergie éolienne est contrôlé.

3. Procédé selon l'une quelconque des revendications précédentes,
**caractérisé en ce qu'**une adaptation des valeurs de paramètres d'exploitation mémorisées intervient au moyen d'une pondération prédéfinie de la valeur de l'écart par rapport à la valeur de paramètre d'exploitation mémorisée.

4. Procédé selon l'une quelconque des revendications précédentes,
**caractérisé en ce que** les valeurs de paramètres d'exploitation et/ou conditions aux limites enregistrées sont enregistrées pendant une période de temps pouvant être prédéfinie.

5. Procédé selon l'une quelconque des revendications précédentes,
**caractérisé en ce que** les valeurs de paramètres d'exploitation et/ou conditions aux limites sont enregistrées pendant un nombre prédéfini de cycles de mesure.

6. Procédé selon l'une quelconque des revendications précédentes,
**caractérisé en ce que** les paramètres d'exploitation utilisés varient en fonction d'une deuxième condition aux limites.

7. Procédé selon la revendication 5,
**caractérisé en ce que**, en cas de dépassement d'une valeur limite de la deuxième condition aux limites, des valeurs de premiers paramètres d'exploitation sont utilisées et **en ce que**, en cas de diminution de la valeur limite de la deuxième condition aux limites, des valeurs de deuxièmes paramètres d'exploitation sont utilisées.

8. Installation à énergie éolienne, dotée d'un dispositif de détection d'un dépôt de givre sur des pales de rotor de l'installation à énergie éolienne avec des capteurs permettant d'enregistrer les valeurs de paramètres d'exploitation prédéfinis et au moins une valeur d'une condition aux limites, à savoir la température extérieure dans la zone de l'installation à énergie éolienne, et permettant de comparer les valeurs de paramètres d'exploitation avec des valeurs mémorisées des paramètres d'exploitation,
**caractérisée en ce que** le dispositif présente des moyens qui en cas d'écart des valeurs de paramètres d'exploitation enregistrées par rapport aux valeurs de paramètres d'exploitation mémorisées et en fonction de la valeur enregistrée de la condition aux limites, à savoir la température extérieure dans la zone de l'installation à énergie éolienne (étape 19), soit adaptent les valeurs de paramètres d'exploitation mémorisées, soit contrôlent le fonctionnement de l'installation à énergie éolienne en fonction aussi des valeurs de paramètres d'exploitation enregistrées prédéfinies.

9. Installation à énergie éolienne selon la revendication 8,
**caractérisée en ce que** le dispositif comprend un microprocesseur.
